# EUROPEAN PATENT APPLICATION

(11) **EP 3 780 245 A1**
(43) Date of publication of application: **17.02.2021**
(21) Application number: 19927572.8
(22) Date of filing: 10.06.2019
(51) Int. Cl.: H01M 10/38

(54) **THIN-FILM LITHIUM-ION BATTERY, METHOD FOR PREPARING THIN-FILM LITHIUM-ION BATTERY, AND TERMINAL**

(71) Applicant: Shenzhen Goodix Technology Co., Ltd., Shenzhen, Guangdong 518045 (CN)
(72) Inventor: LU, Bin, Shenzhen, Guangdong 518045 (CN); SHEN, Jian, Shenzhen, Guangdong 518045 (CN)
(74) Representative: Elzaburu S.L.P.
(86) International application number: PCT/CN2019/090532
(87) International publication number: WO 2020/248093

(57) **Abstract**

The present application provides a thin film lithium ion battery, a preparation method thereof, and a terminal, where the thin film lithium ion battery includes: a base body which is provided with a groove and/or a protrusion; a thin film lithium ion battery cell which is provided on the base body, and covers the groove and/or the protrusion; and a first external electrode and a second external electrode which are configured to connect the thin film lithium ion battery cell to an external component. The thin film lithium ion battery in the present application uses the base body structured with the groove and/or the protrusion, which may increase the area of the thin film lithium ion battery, thus increasing the capacity of the thin film lithium ion battery.

## Description

### TECHNICAL FIELD

The present application relates to the field of lithium ion batteries, and in particular, to a thin film lithium ion battery, a preparation method thereof, and a terminal.

### BACKGROUND

The all-solid thin film lithium ion battery is a lithium ion battery including multiple laminated solid film layers, where the multiple laminated solid film layers include a positive electrode current collector layer, a positive electrode layer, a solid electrolyte layer, a negative electrode layer, a negative electrode current collector layer. As the all-solid thin film lithium ion battery uses a solid electrolyte, the all-solid thin film lithium ion battery has higher safety and stability compared to a traditional lithium ion battery with a liquid electrolyte or a gel electrolyte.

As the positive electrode layer and the negative electrode layer of the all-solid thin film lithium ion battery are in a form of planar thin film, the all-solid thin film lithium ion battery is limited in capacity. In prior art, the capacity of the all-solid thin film lithium ion battery is increased by increasing the thickness of the positive electrode layer and the negative electrode layer of the all-solid thin film lithium ion battery. However, the thickened positive electrode layer and negative electrode layer will render a decrease in the charge and discharge efficiency of the all-solid thin film lithium ion battery.

Therefore, how to increase the capacity of the all-solid thin film lithium ion battery without affecting the charge and discharge efficiency thereof is an urgent problem to be solved.

### SUMMARY

The present application provides a thin film lithium ion battery, a preparation method thereof and a terminal, which may increase the battery capacity of the thin film lithium ion battery.

In a first aspect, the present application provides a thin film lithium ion battery, including:
a base body which is provided with a groove and/or a protrusion;
a thin film lithium ion battery cell which is provided on the base body and covers the groove and/or the protrusion; and
a first external electrode and a second external electrode which are configured to connect the thin film lithium ion battery cell to an external component.

In a second aspect, the present application provides a preparation method of a thin film lithium ion battery, including:
providing a thin film lithium ion battery cell on a base body, where the base body is provided with a groove and/or a protrusion, and the thin film lithium ion battery cell covers the groove and/or the protrusion; and
providing a first external electrode and a second external electrode, where the first external electrode and the second external electrode are configured to connect the thin film lithium ion battery cell to an external component.

In a third aspect, the present application provides a terminal including the thin film lithium ion battery described above in the first aspect.

The present application provides a thin film lithium ion battery, a preparation method thereof and a terminal. The thin film lithium ion battery includes: a base body which is provided with a groove and/or a protrusion; a thin film lithium ion battery cell which is provided on the base body and covers the groove and/or the protrusion; and a first external electrode and a second external electrode which are configured to connect the thin film lithium ion battery cell to an external component. The thin film lithium ion battery in the present application uses the base body structured with the groove and/or the protrusion, which may increase the area of the thin film lithium ion battery, thus increasing the capacity of the thin film lithium ion battery.

### □ BRIEF DESCRIPTION OF DRAWINGS

In order to illustrate technical solutions in embodiments of the present application or in the prior art more explicitly, the following will briefly introduce the drawings required in the description of the embodiments or the prior art. Obviously, the drawings in the following description are about some embodiments of the present application. Persons of ordinary skill in the art can obtain other drawings based on these drawings without any creative effort.
FIG. 1 is a schematic diagram of a groove being formed on a base body according to the present application;
FIG. 2 is a schematic diagram of a column being formed on the base body according to the present application;
FIG. 3 is a first schematic structural diagram of a thin film lithium ion battery according to the present application;
FIG. 4a is a first structure of the thin film lithium ion battery in a technological process according to the present application;
FIG. 4b is a second structure of the thin film lithium ion battery in a technological process according to the present application;
FIG. 4c is a third structure of the thin film lithium ion battery in a technological process according to the present application;
FIG. 4d is a fourth structure of the thin film lithium ion battery in a technological process according to the present application;
FIG. 4e is a fifth structure of the thin film lithium ion battery in a technological process according to the present application;
FIG. 4f is a sixth structure of the thin film lithium ion battery in a technological process according to the present application;
FIG. 4g is a seventh structure of the thin film lithium ion battery in a technological process according to the present application;
FIG. 5 is a second schematic structural diagram of the thin film lithium ion battery according to the present application;
FIG. 6 is a third schematic structural diagram of the thin film lithium ion battery according to the present application;
FIG. 7 is a fourth schematic structural diagram of the thin film lithium ion battery according to the present application;
FIG. 8 is a fifth schematic structural diagram of the thin film lithium ion battery according to the present application;
FIG. 9 is a sixth schematic structural diagram of the thin film lithium ion battery according to the present application;
FIG. 10 is a seventh schematic structural diagram of the thin film lithium ion battery according to the present application;
FIG. 11 is a schematic diagram of a circuit connection of the thin film lithium ion battery according to the present application; and
FIG. 12 is a flow diagram of a preparation method of a thin film lithium ion battery according to the present application.

### Explanation on Reference Signs

- 100-: base body;
- 200-: thin film lithium ion battery cell;
- 101, 101'-: bottom wall;
- 102, 102'-: side wall;
- 300-: substrate;
- 301-: first negative electrode current collector;
- 302-: first negative electrode;
- 303-: first solid electrolyte;
- 304-: first positive electrode;
- 305-: positive electrode current collector;
- 306-: second positive electrode;
- 307-: second solid electrolyte;
- 308-: second negative electrode;
- 309-: second negative electrode current collector;
- 310-: aluminium oxide;
- 311-: undoped silicon glass USG;
- 312-: copper seed layer;
- 400, 313-: first external electrode;
- 500, 314-: second external electrode;
- 3141-: first electrical connection part;
- 3142-: second electrical connection part;
- 315-: insulating layer.

### DESCRIPTION OF EMBODIMENTS

In order to describe objectives, technical solutions, and advantages of the embodiments of the present application more clearly, the technical solutions of the embodiments of the present application will be described hereunder clearly and comprehensively in conjunction with the drawings of the embodiments of the present application, obviously, the described embodiments are only some embodiments of the present application, rather than all the embodiments. Based on the embodiments of the present application, all other embodiments obtained by those of ordinary skill in the art without any creative effort should fall into the protection scope of the present application.

The terms such as "first", "second", "third" and "fourth" (if present) in the specification, the claims and the above-mentioned drawings of the present application are used to distinguish similar objects, but not intended to describe a particular sequence or order. It should be understood that the data applied in this way is interchangeable as appropriate, such that the embodiments of the present application described herein can be implemented, for example, in a sequence other than those illustrated or described herein. Additionally, the terms such as "include", "have" and any of their variants are meant to cover a non-exclusive inclusion. For example, processes, methods, systems, products or devices including a series of steps or units shall not only be limited to those steps or units listed clearly, but may also include other steps or units that are not clearly listed or are inherent to these processes, methods, systems, products or devices.

The thin film lithium ion battery according to the present application will be described hereunder with specific embodiments. The thin film lithium ion battery in this embodiment may include: a base body, a thin film lithium ion battery cell, a first external electrode and a second external electrode.

The base body is provided with a groove and/or a protrusion. The thin film lithium ion battery cell is provided on the base body, and covers the groove and/or the protrusion.

The base body and the thin film lithium ion battery cell provided thereon will be described as follows firstly:

The thin film lithium ion battery prepared in this embodiment is a three-dimensional thin film lithium ion battery. The base body in this embodiment is provided with the groove and/or the protrusion. The providing the groove and/or the protrusion on the base body may be: forming the groove and/or the protrusion on the upper surface or the lower surface of the base body. It should be understood that compared with the base body on which the groove and/or the protrusion is not provided, in the embodiment, the base body provided with the groove and/or the protrusion has a larger surface area.

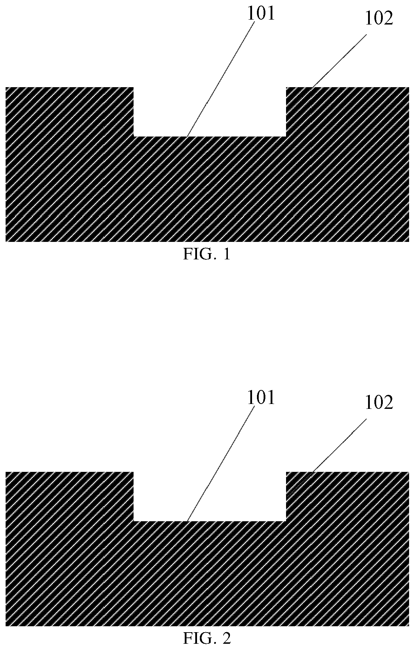

In this case, if a thin film lithium ion battery cell is provided on the base body and the thin film lithium ion battery cell covers the groove and/or the protrusion, as the surface area of the base body increases, the thin film lithium ion battery cell may also have a larger surface, thus increasing the battery capacity of the thin film lithium ion battery. The groove may include but not limited to a hole or a slot; the protrusion may include but not limited to a column or a wall. FIG. 1 is a schematic diagram of a groove formed on the base body according to the present application. FIG. 2 is a schematic diagram of a column formed on the base body according to the present application. FIG. 1 and FIG. 2 are both examples. It should be understood that, in this embodiment, the groove or the protrusion formed on the base body is at least one in number. That is, in this embodiment, several grooves or protrusions can be formed on the base body to increase the surface area of the base body. Moreover, in this embodiment, a combination of the groove and the protrusion may also be used on the base body to increase the surface area of the base body.

The base body includes an upper surface and a lower surface. Optionally, in order to enhance the convenience of manufacturing the thin film lithium ion battery in this embodiment, the groove and/or the protrusion may be provided on the upper surface of the base body. Correspondingly, the groove is formed by recessing downward from the upper surface, as shown in FIG. 1; or the protrusion is formed by protruding upward from the upper surface, as shown in FIG. 2.

Optionally, when the base body is provided with a groove, the groove includes a bottom wall and a side wall. The side wall is connected with the upper surface of the base body, and the thin film lithium ion battery cell is formed on the side wall and the bottom wall. As shown in FIG. 1, the groove has a bottom wall 101, and the groove has a side wall 102. That is, the thin film lithium ion battery cell is formed on the bottom wall 101 and the side wall 102 of the groove.

Optionally, when the base body is provided with a protrusion, the protrusion includes a top wall and a side wall. The side wall is connected with the upper surface of the base body, and the thin film lithium ion battery cell is formed on the side wall and the top wall. As shown in FIG. 2, the groove has a bottom wall 101', and the groove has a side wall 102'. That is, the thin film lithium ion battery cell is formed on the bottom wall 101' and the side wall 102' of the groove.

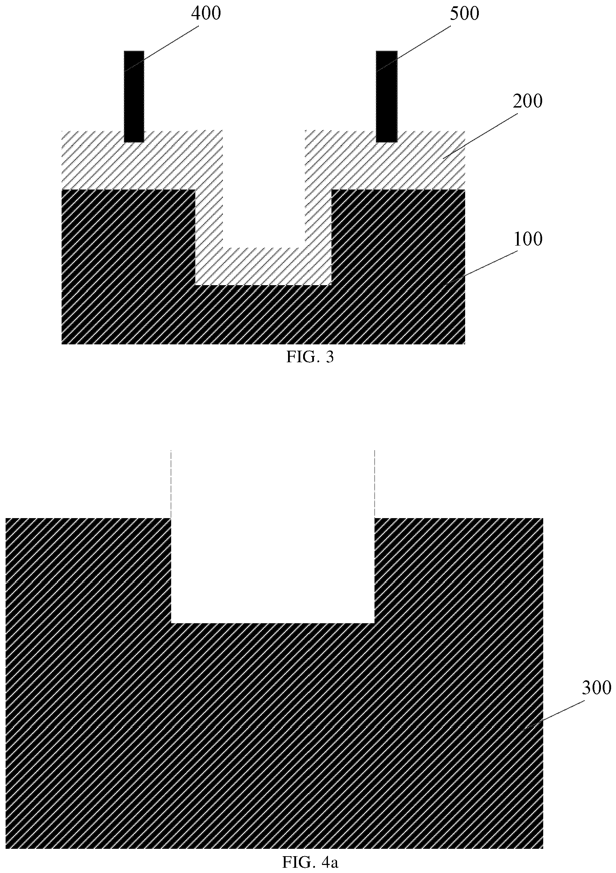

FIG. 3 is a first schematic structural diagram of the thin film lithium ion battery according to the present application. It should be understood that description is made to FIG. 3 with an example where the base body is provided with the groove thereon. As shown in FIG. 3, the thin film lithium ion battery includes a base body 100 and a thin film lithium ion battery cell 200 provided on the base body 100. The thin film lithium ion battery cell 200 covers the groove, optionally, the thin film lithium ion battery cell 200 may be provided such that it is attached to the base body 100. The attach provision means that the lower surface of the thin film lithium ion battery cell 200 is in complete contact with the upper surface of the base body 100.

Optionally, the base body in this embodiment may be a substrate, that is, the groove and/or the protrusion is provided on the upper surface of the substrate. The substrate may include but not limited to materials of silicon, glass, organic polymer, and Group III-V semiconductor (such as silicon carbide SiC, gallium nitride GaN, gallium arsenide GaAs, etc.), or may include a material with an SOI structure. Optionally, the base body in this embodiment may also include at least one of an epitaxial layer, an oxide layer, a doped layer or a bonding layer formed on the substrate, that is, the base body includes the substrate described above, and at least one of the epitaxial layer, the oxide layer, the doped layer or the bonding layer formed on the substrate. Providing the groove and/or the protrusion on the upper surface of the base body means providing the groove and/or the protrusion on the upper surface of the epitaxial layer, the oxide layer, the doped layer or the bonding layer formed on the substrate.

The following is the introduction to the first external electrode and the second external electrode, where the first external electrode and the second external electrode are configured to connect the thin film lithium ion battery cell to an external component.

Optionally, the thin film lithium ion battery cell in this embodiment may have the same structure as that of the thin film lithium ion battery in the prior art, that is, including: a positive electrode current collector, a positive electrode, a solid electrolyte, a negative electrode and a negative electrode current collector. The first external electrode may be electrically connected with the positive electrode current collector or the negative electrode current collector, correspondingly, the second external electrode may be electrically connected with the negative electrode current collector or the positive electrode current collector. Moreover, the first external electrode and the second external electrode may be connected with an external component to complete the charge and discharge of the thin film lithium ion battery.

Exemplarily, instead of showing the structure of the thin film lithium ion battery cell 200, FIG. 3 only shows 200 as a whole. A first external electrode 400 and a second external electrode 500 are also included in FIG. 3, which are configured to connect the thin film lithium ion battery cell to an external component. Optionally, the method of connection of the first external electrode 400 and the second external electrode 500 with the thin film lithium ion battery cell 200 may be the same as the method of connection in the prior art.

The thin film lithium ion battery provided in this embodiment includes: a base body which is provided with a groove and/or a protrusion; a thin film lithium ion battery cell which is provided on the base body, and covers the groove and/or the protrusion; and a first external electrode and a second external electrode which are configured to connect the thin film lithium ion battery cell to an external component. The thin film lithium ion battery in this embodiment uses the base body structured with the groove and/or the protrusion, which may increase the area of the thin film lithium ion battery, thus increasing the capacity of the thin film lithium ion battery.

In the following embodiments, the structure of the thin film lithium ion battery cell provided in the present application will be described in detail in conjunction with the technological process of the thin film lithium ion battery cell.

Step 1, form the thin film lithium ion battery cell on the upper surface of the base body.

The thin film lithium ion battery cell in this embodiment includes: a first positive electrode, a first negative electrode, a first solid electrolyte layer, a first positive electrode current collector and a first negative electrode current collector. The first solid electrolyte layer is sandwiched between the first positive electrode and the first negative electrode, the first negative electrode is provided between the first negative electrode current collector and the first solid electrolyte layer, and the first positive electrode is provided between the first positive electrode current collector and the first solid electrolyte layer. It should be understood that the base body in this embodiment is a base body provided with a groove and/or a protrusion.

When the thin film lithium ion battery is charging, lithium atoms at the first negative electrode are ionized to generate lithium ions and electrons, and the lithium ions, by moving toward the positive electrode via a first solid electrolyte, are synthesized with the electrons to obtain the lithium atoms. When the thin film lithium ion battery is discharging, lithium atoms are ionized into lithium ions and electrons at the positive electrode, and the lithium ions, by moving toward the negative electrode via a first solid electrolyte, are synthesized with the electrons at the negative electrode to obtain the lithium atoms. The first positive electrode current collector and the first negative electrode current collector are configured to collect electrons so that the current generated from the electron movement is gathered to form a large current for external output.

Optionally, a deposition process may be applied in this embodiment to form, on the base body, a first positive electrode, a first negative electrode, a first solid electrolyte layer, a first positive electrode current collector and a first negative electrode current collector of the thin film lithium ion battery cell. The deposition process may include but not limited to: atom layer deposition (ALD), chemical vapor deposition (CVD) or physical vapor deposition (PVD).

Optionally, the first negative electrode in this embodiment may include but not limited to materials of lithium Li, carbon C, silicon Si, germanium Ge, metallic oxides and nitrides (including tin nitride, tin oxide, vanadium oxide, titanium oxide, etc.) and Li₄Ti₅O₁₂. The materials for the negative electrode described above can be used alone or in combination (for example, the lithium is 60%, and the carbon is 40%).

Optionally, the first positive electrode in this embodiment may include but not limited to materials of metal salt containing Li (such as lithium cobalt oxide LiCo0₂, lithium nickel oxide LiNi02 and lithium manganese oxide LiMn204, etc.), lithium-metal-phosphate(such as LiFeP04, LiMnPO₄, LiCoPO₄, etc.), or doping modified materials derived from the above materials (such as Li(NiMn)₂O₄, Li(NiCoMn)O₂, etc.). It can also be a material that can be embedded into metal Li, such as V₂O₅ and others. The materials for the positive electrode described above can be used alone or in combination.

Optionally, the first solid electrolyte in this embodiment may include but not limited to materials of Nitrogen-doped lithium phosphate LiPON, LiSiPON, LiNb03, LiTa03, lithium lanthanum titanate LLTO, etc. The materials for the solid electrolyte described above can be used alone or in combination.

Optionally, the material used for the first positive electrode current collector can be a conducting material that remains stable at a high potential, and the material used for the first negative electrode current collector is a conducting material that can remain stable at a low potential.

Optionally, the first positive electrode current collector may include but not limited to materials of, stainless steel, aluminum Al, or precious metals like platinum Pt, ruthenium Ru, iridium Ir, and others. The above optional materials can be used alone or in combination (for example using a mixed material of Al and Pt).

Optionally, the first negative electrode current collector may include but not limited to materials of stainless steel, copper Cu, nickel Ni, titanium Ti, titanium nitride TiN, tantalum Ta, tantalum nitride TaN, tantalum silicon nitride TaSiN, tantalum carbon nitride TaCN, titanium aluminum nitride TiAlN. The above optional materials can be used alone or in combination

Optionally, the first negative electrode current collector, the first negative electrode, the first solid electrolyte, the first positive electrode, and the first positive electrode current collector of the thin film lithium ion battery cell provided in this embodiment respectively include materials of: TiN, SnN, LiPON, LiCo0₂ and Pt.

Correspondingly, the laminated structure of the thin film lithium ion battery cell from top to bottom or from bottom to top may be the first negative electrode current collector, the first negative electrode, the first solid electrolyte layer, the first positive electrode and the first positive electrode current collector. That is, the first negative electrode current collector may be provided on the base body or the first positive electrode current collector may be provided on the base body.

Description is made in this embodiment with an example where the first negative electrode current collector is provided on the base body. The first negative electrode current collector covers the groove and/or the protrusion; the first negative electrode, the first solid electrolyte layer, the first positive electrode and the first positive electrode current collector are sequentially laminated on the first negative electrode current collector and at least partially cover the groove and/or the protrusion.

It should be understood that the first negative electrode, the first solid electrolyte layer, the first positive electrode and the first positive electrode current collector may entirely cover the groove and/or the protrusion, or partially cover the groove and/or the protrusion, but both can increase areas of the first negative electrode and the first positive electrode of the thin film lithium ion battery cell, thus capable of increasing the capacity of the thin film lithium ion battery. Moreover, the first negative electrode, the first solid electrolyte layer, the first positive electrode and the first positive electrode current collector at least partially cover the groove and/or the protrusion, enabling to reduce the overall volume of the thin film lithium ion battery, thus making it possible to prepare a thin film lithium ion battery with smaller volume.

Optionally, the first negative electrode current collector in this embodiment is a thin film layer with uniform thickness, and the first negative electrode, the first solid electrolyte layer, the first positive electrode and the first positive electrode current collector may also be thin films with uniform thickness, so that the thin film lithium ion battery can have balanced charge and discharge efficiency at each position, to improve the performance of the thin film lithium ion battery.

In this structure, the first external electrode is connected with the first positive electrode current collector, and the second external electrode is connected with the first negative electrode current collector. Correspondingly, the first external electrode may be a positive electrode, and the second external electrode may be a negative electrode.

The structure of the thin film lithium ion battery cell described above is similar to the structure of a planar thin film lithium ion battery in the prior art, but because the thin film lithium ion battery provided in this embodiment has a three-dimensional structure, and the structure of the thin film lithium ion battery has larger areas for the positive and negative electrodes compared with the structure of the thin film lithium ion battery in the prior art, it has a larger battery capacity.

In order to further increase the battery capacity of the thin film lithium ion battery, in this embodiment, also, several thin film lithium ion battery cells with the same structure as that of the above thin film lithium ion battery cell may be formed on the base body. But for each thin film lithium ion battery cell, a negative electrode current collector, a negative electrode, a solid electrolyte, a positive electrode and a positive electrode current collector are included.

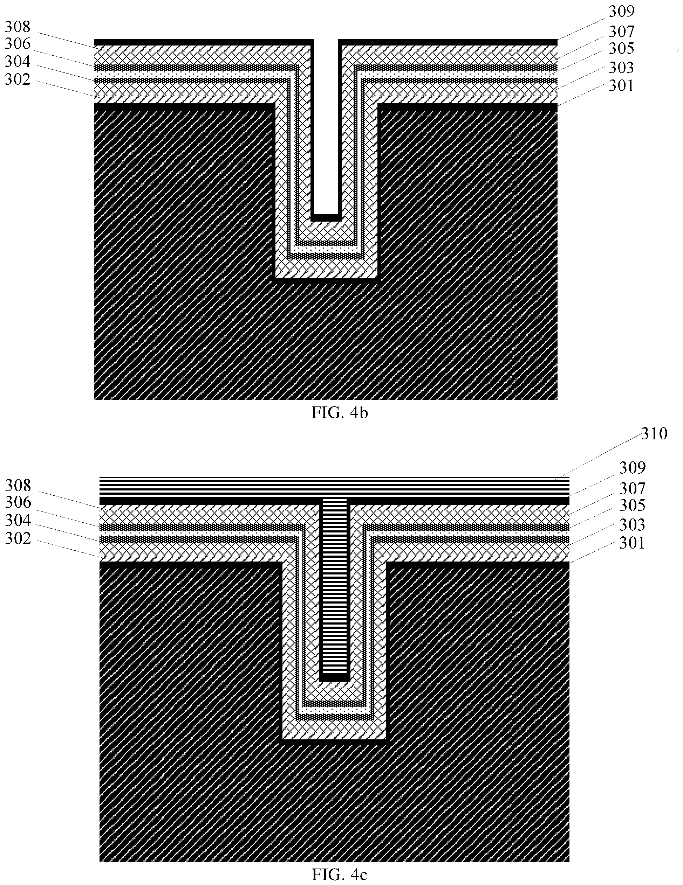

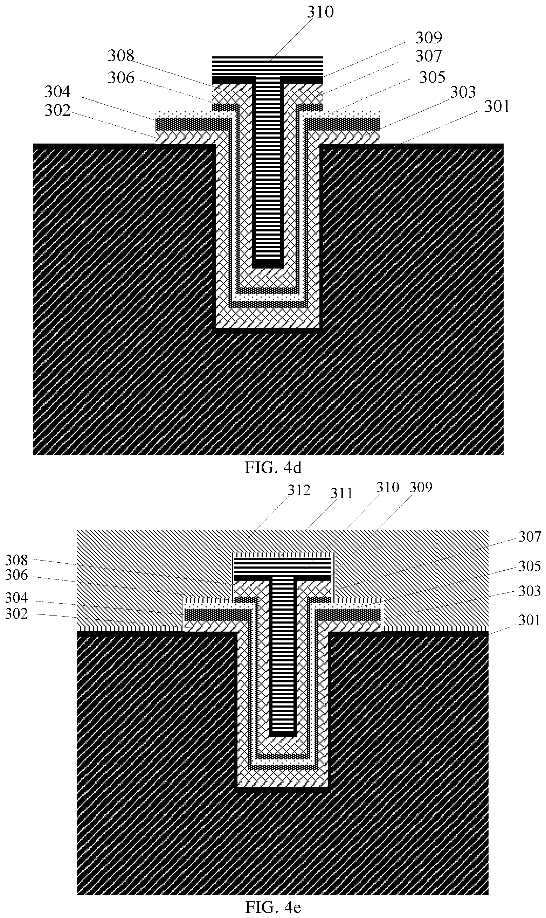

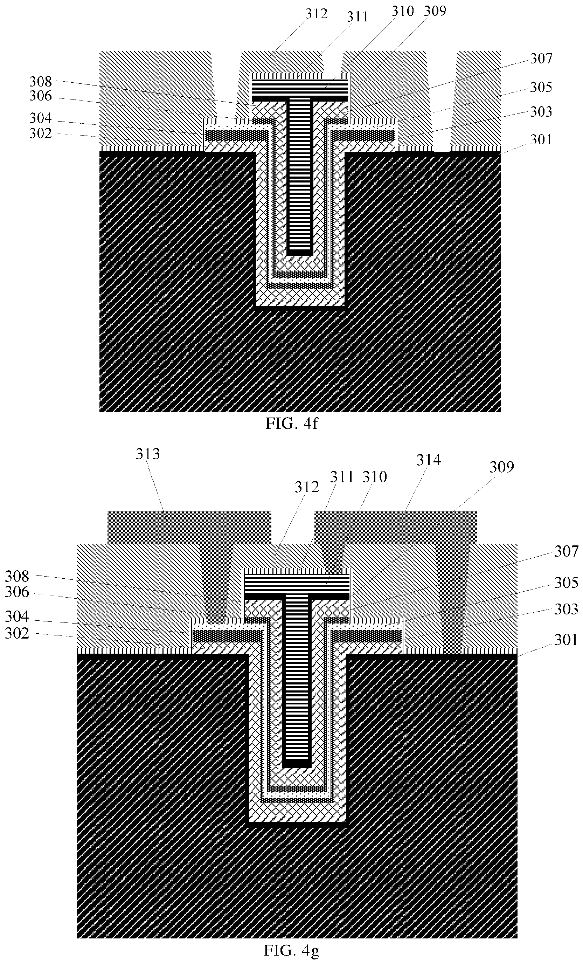

Correspondingly, FIG. 4a to FIG. 4g are schematic diagrams of the thin film lithium ion battery in technological processes according to the present application. Among them, FIG. 4a is a first structure of the thin film lithium ion battery in a technological process according to the present application; FIG. 4b is a second structure of the thin film lithium ion battery in a technological process according to the present application; FIG. 4c is a third structure of the thin film lithium ion battery in a technological process according to the present application; FIG. 4d is a fourth structure of the thin film lithium ion battery in a technological process according to the present application; FIG. 4e is a fifth structure of the thin film lithium ion battery in a technological process according to the present application; FIG. 4f is a sixth structure of the thin film lithium ion battery in a technological process according to the present application; FIG. 4g is a seventh structure of the thin film lithium ion battery in a technological process according to the present application. It should be understood that description is made to FIG. 4a to FIG. 4g with an example where a groove is provided on the base body.

The substrate 300 shown in FIG. 4a is a substrate provided with a groove. Optionally, the substrate 300 may be a silicon wafer substrate. In this embodiment photoetching and deep silicon etching processes may be applied to form a groove on the substrate 300.

In this embodiment, in order to decrease the volume of the several formed thin film lithium ion battery cell structures, two adjacent thin film lithium ion battery cells may share the negative electrode current collector or the positive electrode current collector. It should be understood that, description is made in the following embodiments with an example where the first negative electrode current collector is provided on the base body.

It should be understood that, in this embodiment, structures included in two thin film lithium ion battery cells are taken as a whole for description, that is, both of them belong to the structure in the thin film lithium ion battery cell. Correspondingly, the thin film lithium ion battery cell in this embodiment also includes a second positive electrode, a second solid electrolyte layer, a second negative electrode and a second negative electrode current collector; the second positive electrode, the second solid electrolyte layer, the second negative electrode and the second negative electrode current collector are laminated sequentially on the first positive electrode current collector. In the thin film lithium ion battery cell, the first positive electrode and the second positive electrode share the first positive electrode current collector.

As shown in FIG. 4b, FIG. 4b shows: a first negative electrode current collector 301, a first negative electrode 302, a first solid electrolyte 303, a first positive electrode 304, a first positive electrode current collector 305, a second positive electrode 306, a second solid electrolyte 307, a second negative electrode 308 and a second negative electrode current collector 309 are formed sequentially on the upper surface of the substrate 300. It should be understood the first negative electrode current collector 301, the first negative electrode 302, the first solid electrolyte 303, and the first positive electrode 304 shown in FIG. 4b may be taken as a structure in one thin film lithium ion battery cell; the second positive electrode 306, the second solid electrolyte 307, the second negative electrode 308, and the second negative electrode current collector 309 may be taken as a structure in the other thin film lithium ion battery cell, where the two thin film lithium ion battery cells share the first positive electrode current collector 305.

Step 2, perform photoetching on the thin film lithium ion battery to expose the first negative electrode current collector, the first positive electrode current collector and the second negative electrode current collector.

In this embodiment, in order to make the first external electrode and the second external electrode connect the thin film lithium ion battery cell to an external component, photoetching may be performed on the thin film lithium ion battery cell.

Optionally, in this embodiment, the first negative electrode current collector, the first positive electrode current collector and the second negative electrode current collector exposed after the photoetching form a step shape. The photoetched first negative electrode current collector has the same dimension as the substrate, the dimension of the photoetched first positive electrode current collector is smaller than the dimension of the photoetched first negative electrode current collector, and the dimension of the photoetched second negative electrode current collector is smaller than the dimension of the photoetched first positive electrode current collector.

As shown in FIG. 4d, the first negative electrode current collector 301, the first positive electrode current collector 305, and the second negative electrode current collector 309 exposed after the photoetching form a step shape.

Step 3, form an insulating layer on the surface of the photoetched thin film lithium ion battery.

As the first external electrode and the second external electrode are conducting, and the thin film lithium ion battery cell is also conducting, in order to keep the thin film lithium ion battery cell from electric leakage, an insulating layer may be formed on the surface of the thin film lithium ion battery cell, that is, the insulating layer is formed on the upper surface of the second negative electrode current collector.

Optionally, the insulating layer may be a water-oxygen isolation layer for isolating water vapor and oxygen in the outside air. The insulating layer may include but not limited to silicon oxide, silicon nitride, silicon oxynitride, silicon-containing glass (such as undoped silicon glass USG, borosilicate glass BSG, phosphorosilicate glass PSG, boron-phosphorosilicate glass BPSG) aluminium oxide or the like. The above optional materials can be used alone or in combination

As shown in FIG. 4f, in this embodiment, an ALD process is used to deposit a layer of aluminium oxide 310 on the surface of the step, and then a plasma enhanced chemical vapor deposition (PECVD) process is used to deposit a layer of USG 311, with the aluminium oxide 310 and the USG 311 together acting as the insulating layer.

Optionally, in this embodiment, the first external electrode and the second external electrode may use the same material, e.g., titanium nitride TiN or titanium Ti (may be used alone or in combination). Or else, the first external electrode and the second external electrode may use different materials, e.g., respectively Al and Cu.

Step 4, form the first external electrode and the second external electrode.

In this embodiment, the structures of the first external electrode and the second external electrode are described in detail in the following.

Optionally, before Step 2, this embodiment may also include:

Step 5, deposit a conducting layer on the upper surface of the second negative electrode current collector.

Correspondingly, the conducting layer is sandwiched between the second negative electrode current collector and the insulating layer, and covers the groove and/or the protrusion.

Optionally, as shown in FIG. 4c, in this embodiment, a PVD process can be used on the surface of the second negative electrode current collector 309 to deposit a conducting layer, such as a copper seed layer 312. In this embodiment, Step 2 described above may be performed after the copper seed layer 312 is formed. Correspondingly, the insulating layer is on the surface of the copper seed layer 312.

Optionally, in this embodiment, after the copper seed layer 312 is formed, an electroplating process may be used to fill the groove with copper to increase the diffusion area of lithium ions. Or, the groove is filled with an insulating material to ensure that the insulating layer is a planarization layer.

The first external electrode and the second external electrode are described hereunder with two possible structures as follow.

The first possible structure is: when the base body is an insulating base body, the first external electrode and the second external electrode are both provided on a first side of the base body, and the first side is a side on which the thin film lithium ion battery cell is provided.

In this embodiment, the deposition process may be used to form the first external electrode and the second external electrode. The first external electrode is electrically connected with the first positive electrode current collector from the upper surface of the insulating layer and through the insulating layer, the second external electrode is electrically connected with the first negative electrode current collector and the second negative electrode current collector from the upper surface of the insulating layer and through the insulating layer.

Exemplarily, at least three via holes may be formed on the insulating layer to respectively expose the first negative electrode current collector, the first positive electrode current collector and the second negative electrode current collector. If three via holes are formed on the insulating layer, the first external electrode is electrically connected with the first positive electrode current collector through one via hole, and the second external electrode is electrically connected with the first negative electrode current collector having a second polarity and the second negative electrode current collector through two via holes, respectively.

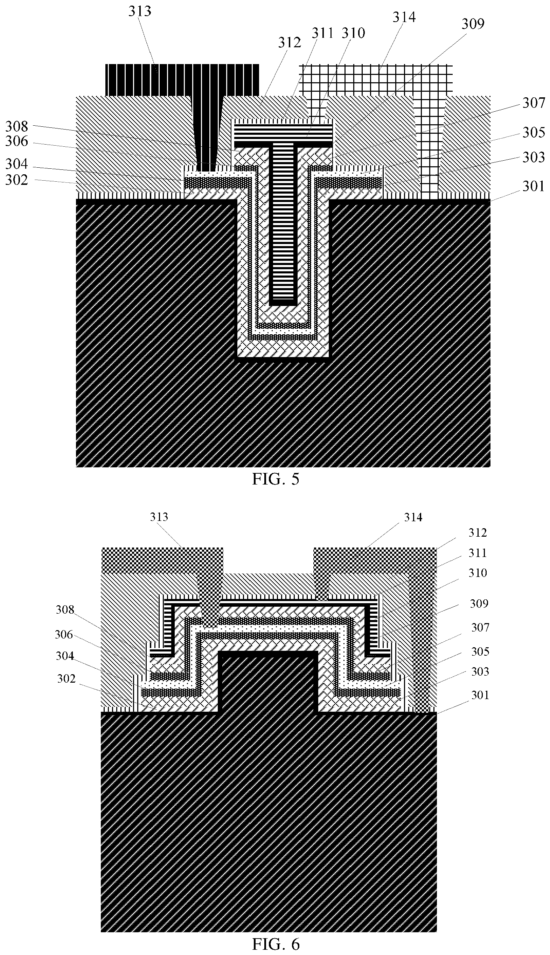

In FIG. 4f, description is made with an example where three via holes are formed on the insulating layer. In this embodiment, the PVD process is used to deposit the via holes with TiN and /or Ti; and then the phtoectching process is used to pattern a layer of TiN and /or Ti, thus forming two external electrodes of the thin film lithium ion battery. As shown in FIG. 4g, the two external electrodes are respectively the first external electrode 313 and the second external electrode 314. The first external electrode 313 is connected with the first positive electrode current collector 305 through one via hole, and the second external electrode 314 is connected respectively with the first negative electrode current collector 301 and the second negative electrode current collector 309 through two remaining via holes. The two external electrodes of the thin film lithium ion battery shown in FIG. 4g have the same material. FIG. 5 is a second schematic structural diagram of the thin film lithium ion battery according to the present application. The thin film lithium ion battery of FIG. 5 only differs from the thin film lithium ion battery of FIG. 4 in the two external electrodes. The first external electrode 313 shown in FIG. 5 is Al, and the second external electrode 314 is Cu.

It should be understood that FIG. 5 and FIG. 4g both show an example where the groove is filled with copper. When being connected with the second negative electrode current collector 309 through two remaining via holes, the second external electrode may be connected with the copper seed layer 312. Because the copper seed layer 312 is conducting, it is connected with the second external electrode 309 indirectly.

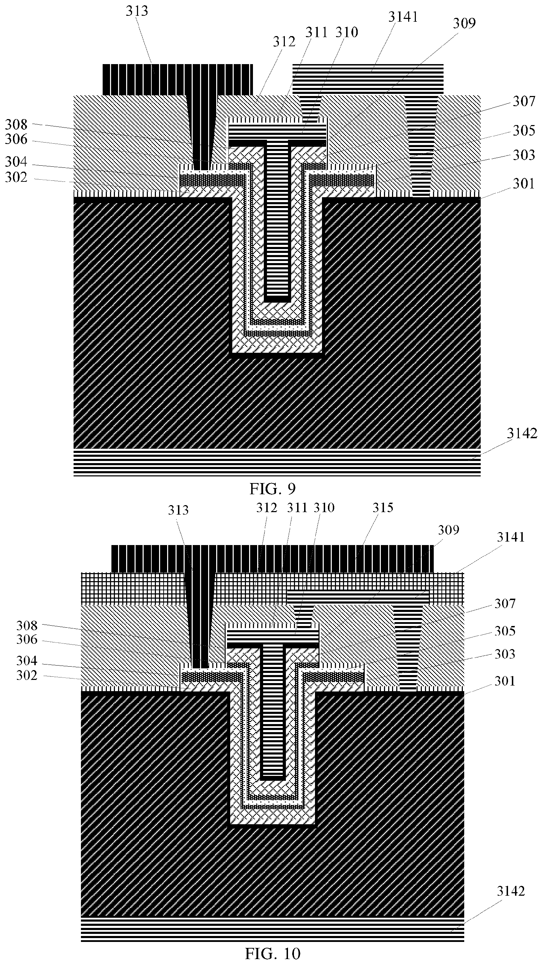

FIG. 6 is a third schematic structural diagram of the thin film lithium ion battery according to the present application. Different from FIG. 4g, the base body of the thin film lithium ion battery shown in FIG. 10 is a base body provided with a protrusion. It should be understood, except that the base body of the thin film lithium ion battery shown in FIG. 6 have a structure different from that of the base body in FIG. 4g, the reaming structures are the same. It should be understood that when the first external electrode 313 in FIG. 6 is connected with the first positive electrode current collector 305, since it passes through multiple conducting layers, in order to prevent electric leakage, contacting parts of the first external electrode 313 with other conducting layers can be separated using an insulating material.

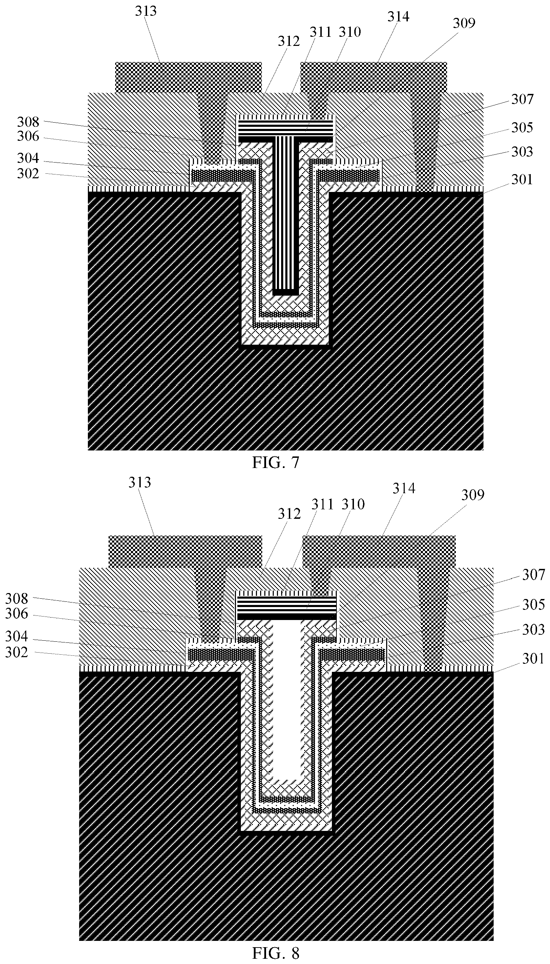

FIG. 7 is a fourth schematic structural diagram of the thin film lithium ion battery according to the present application. FIG. 8 is a fifth schematic structural diagram of the thin film lithium ion battery according to the present application. It should be understood that when the groove is filled with an insulating material (as shown with gray in the groove in FIG. 7), or the groove is not filled with any material (as shown with blank in the groove in FIG. 8), the second external electrode can be directly connected with the second negative electrode current collector 309 through two remaining via holes. The following two possible ways are the same. The first external electrode and the second external electrode in FIG. 7 and FIG. 8 have the same material, like the first external electrode and the second external electrode in FIG. 4g, respectively. It should be understood that the first external electrode and the second external electrode in FIG. 7 and FIG. 8 may have a different material, like that shown in FIG. 5.

The second possible structure is: the base body is a conducting base body. The second external electrode may include a first electrical connection part and a second electrical connection part, the first electrical connection part and the first external electrode are both provided on a first side of the base body, the second electrical connection part is provided on a second side of the base body, the first electrical connection part and the second electrical connection part are both conducting with the base body, and the first side is a side on which the thin film lithium ion battery cell is provided.

In this embodiment, the deposition process is also used to form the first external electrode and the second external electrode. The first external electrode is electrically connected, from an upper surface of the insulating layer and through the insulating layer, with the first positive electrode current collector and the second positive electrode current collector; the first electrical connection part is electrically connected, from the upper surface of the insulating layer and through the insulating layer, with the first negative electrode current collector and the second negative electrode current collector. As the base body is a conducting base body, the second electrical connection part in the second external electrode may be electrically connected with the first negative electrode current collector and the second negative electrode current collector indirectly.

Optionally, in this embodiment, the connection of the first external electrode, the first electrical connection part and the second electrical connection part with the current collector may use the provision of the via holes on the insulating layer to achieve electrical connection.

FIG. 9 is a sixth schematic structural diagram of the thin film lithium ion battery according to the present application. Description is made to FIG.9 with an example where three via holes are formed on the insulating layer. As shown in FIG. 9, in this embodiment, the way of forming the first external electrode 313 is the same as the way of forming the first external electrode 313 described above in the first possible structure; the way of forming the first electrical connection part 3141 may be the same as the way of forming the second external electrode 314 described above in the first possible structure. The first external electrode 313 is connected with the positive electrode current collector 305 through one of the three via holes, and both ends of the first electrical connection part 3141 are connected respectively with the first negative electrode current collector 301 and the second negative electrode current collector 309 through two remaining via holes.

The second electrical connection part of the second external electrode may be provided on a second side of the base body. As shown in FIG. 9, in this embodiment, the PVD process is used on the lower surface of the substrate 300 to form the second electrical connection part 3142, as the substrate 300 is conducting, therefore, the second electrical connection part 3142 is indirectly connected with the first negative electrode current collector 301 and the second negative electrode current collector 309, respectively. In FIG.9, the first external electrode 313 is made of Al, the second electrical connection part 3142 is made of Cu, and the first electrical connection part 3141 is made of Cu. It should be understood that the first electrical connection part 3141 may also use other conducting materials.

Optionally, in the above second possible structure, the structure of the thin film lithium ion battery can be provided as shown in FIG. 10 to increase the area of the first external electrode. FIG. 10 is a seventh schematic structural diagram of the thin film lithium ion battery according to the present application. The thin film lithium ion battery cell may also include another insulating layer, enabling the first external electrode 313 and the first electrical connection part 3141 in the above structure to be provided on a different insulating layer. As shown in FIG. 10, the way of forming the first electrical connection part 3141 in this embodiment may be the same as the way of forming the first electrical connection part 3141 described above in the second possible structure. Both ends of the first electrical connection part 3141 are respectively connected with the first negative electrode current collector 301 and the second negative electrode current collector 309 through two via holes. Different from FIG. 8, another insulating layer 315 is formed on the surface of the insulating layer and the first electrical connection part 3141 in FIG. 10; the material of the insulating layer 315 may be the same as or different from the insulating layer 310 or 311.

A via hole is formed on the insulating layer 315, and the deposition process is applied on the insulating layer with the via hole formed thereon to form the first external electrode 313, where the way of forming the first external electrode 313 may be the same as the way of forming the first external electrode 313 described above in the second possible structure. The first external electrode 313 is connected with the positive electrode current collector 305 through the via hole.

The second electrical connection part 3142 is formed on the lower surface of the substrate, and the way of forming the second electrical connection part 3142 may be the same as the way of forming the second electrical connection part 3142 described above in the second possible structure. Optionally, the first external electrode 313 and the second electrical connection part 3142 may have the same dimension as the substrate 300. In FIG. 10, the first external electrode 313 is made of Al, the second electrical connection part 3142 is made of Cu, and the first electrical connection part 3141 is also made of Cu.

The structure of the first external electrode and the second external electrode formed in this embodiment may be as shown in FIG. 4g, FIG. 9 and FIG. 10.

It should be understood that, if a thin film lithium ion battery cell with the same structure as that described above is also formed on the second negative electrode current collector, further, the thin film lithium ion battery cell may also include a third negative electrode, a third solid electrolyte layer, a third positive electrode and a second positive electrode current collector; the third negative electrode, the third solid electrolyte layer, the third positive electrode and the second positive electrode current collector are laminated on the second negative electrode current collector sequentially. The second negative electrode and the third negative electrode of the thin film lithium ion battery cell share the second negative electrode current collector.

Correspondingly, the insulating layer included in the thin film lithium ion battery cell is laminated on the second positive electrode current collector; moreover, the conducting layer is sandwiched between the second negative electrode current collector and the insulating layer, and covers the groove and/or the protrusion.

Correspondingly, the first external electrode and the second external electrode may be provided at positions the same as those in the above embodiment. The corresponding connection relationship is:
when the base body is an insulating base body, and the first external electrode and the second external electrode are both provided on a first side of the base body, the first side is a side on which the thin film lithium ion battery cell is provided.

Correspondingly, at least four via holes are provided on the insulating layer. The first external electrode is electrically connected, from an upper surface of the insulating layer and through the insulating layer (that is, through the at least two via holes), with the first positive electrode current collector and the second positive electrode current collector respectively; and the second external electrode is electrically connected, from the upper surface of the insulating layer and through the insulating layer (that is, through at least two via holes), with the first negative electrode current collector and the second negative electrode current collector respectively.

When the base body is a conducting base body, the second external electrode includes a first electrical connection part and a second electrical connection part. The first electrical connection part and the first external electrode are both provided on a first side of the base body, in a case that the second electrical connection part is provided on a second side of the base body, the first electrical connection part and the second electrical connection part are both conducting with the base body, and the first side is a side on which the thin film lithium ion battery cell is provided.

Correspondingly, at least four via holes are provided on the insulating layer. The first external electrode is electrically connected, from an upper surface of the insulating layer and through the insulating layer (that is, through the at least two via holes), with the first positive electrode current collector and the second positive electrode current collector respectively; and the first electrical connection part is electrically connected, from the upper surface of the insulating layer and through the insulating layer (that is, through at least two via holes), with the first negative electrode current collector and the second negative electrode current collector respectively.

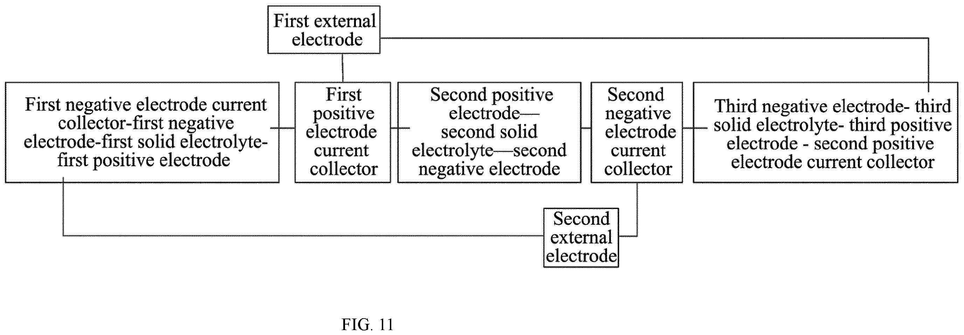

Correspondingly, for brief description, this embodiment does not show the corresponding structure of the above thin film lithium ion battery, but the circuit connection mode of the thin film lithium ion battery will be described with reference to FIG. 11. FIG. 11 is the circuit connection diagram of the thin film lithium ion battery according to the present application.

The first external electrode is electrically connected with the first positive electrode current collector and the second positive electrode current collector respectively, the second external electrode is electrically connected with the first negative electrode current collector and the second negative electrode current collector respectively. Furthermore each positive electrode and each negative electrode in the thin film lithium ion battery cell are connected in parallel, which can further increase the capacity of the thin film lithium ion battery.

It is conceivable that, according to the above structure, if a plurality of film layer structures identical to the structure of the above thin film lithium ion battery cell are sequentially formed on the base body, the shared film layers in the thin film lithium ion battery cell are sequentially: the first positive electrode current collector, the second negative electrode current collector, the second positive electrode current collector, the fourth negative electrode current collector and so on.

In this embodiment, on one hand, the base body with the groove and/or the protrusion is used so as to increase the area of the thin film lithium ion battery cell, thus achieving the purpose of increasing the capacity of the thin film lithium ion battery; on the other hand, the negative and positive electrode film layers of the formed thin film lithium ion battery cell may be connected in parallel in terms of structure, which may further increase the capacity of the thin film lithium ion battery.

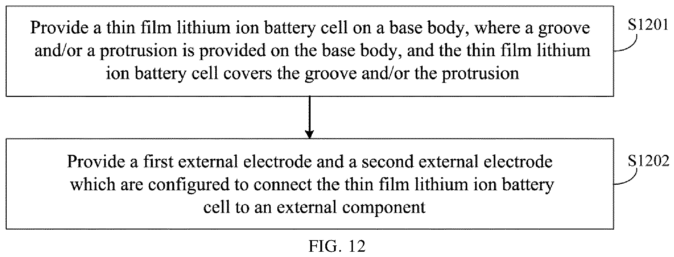

FIG. 12 is a flow diagram of a preparation method of a thin film lithium ion battery according to the present application. As shown in FIG. 12, the preparation method of the thin film lithium ion battery provided in the present application may include:
S 1201, provide a thin film lithium ion battery cell on a base body, where a groove and/or a protrusion is provided on the base body, and the thin film lithium ion battery cell covers the groove and/or the protrusion.

In this embodiment, the thin film lithium ion battery cell is provided on the base body. The groove and/or the protrusion is provided on the base body, and the thin film lithium ion battery cell covers the groove and/or the protrusion. As the thin film lithium ion battery prepared in this embodiment is a three-dimensional thin film lithium ion battery, and as the groove and/or the protrusion is provided on the base body, the surface area of the base body is increased; and as the thin film lithium ion battery cell covers the groove and/or the protrusion, the thin film lithium ion battery cell has a greater area, thus capable of achieving the purpose of increasing the battery capacity of the thin film lithium ion battery.

S 1202, provide a first external electrode and a second external electrode which are configured to connect the thin film lithium ion battery cell to an external component.

It should be understood that in this embodiment, for the structures of the thin film lithium ion battery cell, the first external electrode and the second external electrode as well as the preparation method thereof, reference may be made to relevant description in the above embodiments, and won't be repeated herein.

The present application also provides a terminal, where the terminal includes the thin film lithium ion battery in the above embodiments. Optionally, the terminal may include but not limited to: a camera, a smart phone, a fingerprint recognition device (such as an intelligent door lock) and so on.

The preparation method of the thin film lithium ion battery as well as the terminal provided in this embodiment are similar to principles and technical effects of the above thin film lithium ion battery cell, which won't be repeated herein.

Finally, it should be noted that: the above embodiments are only used to describe the technical solutions of the present application, but not to limit the same. Although the present application has been described in details with reference to the above-mentioned embodiments, persons of ordinary skill in the art should understand that modifications can still be made to the technical solutions described in the above-mentioned embodiments, or equivalent substitutions can be made to some or all of the technical features therein; and these modifications or substitutions will not make the essence of the corresponding technical solutions depart from the scope of the technical solutions in the embodiments of the present application.

## Claims

1. A thin film lithium ion battery, comprising:
a base body, provided with a groove and/or a protrusion;
a thin film lithium ion battery cell, provided on the base body and covers the groove and/or the protrusion; and
a first external electrode and a second external electrode, configured to connect the thin film lithium ion battery cell to an external component.

2. The thin film lithium ion battery according to claim 1, wherein the base body comprises an upper surface and a lower surface, the groove is formed by recessing downward from the upper surface, or the protrusion is formed by protruding upward from the upper surface.

3. The thin film lithium ion battery according to claim 2, wherein the thin film lithium ion battery cell comprises: a first positive electrode, a first negative electrode, a first solid electrolyte layer, a first positive electrode current collector and a first negative electrode current collector; wherein the first solid electrolyte layer is sandwiched between the first positive electrode and the first negative electrode, the first negative electrode is provided between the first negative electrode current collector and the first solid electrolyte layer, and the first positive electrode is provided between the first positive electrode current collector and the first solid electrolyte layer.

4. The thin film lithium ion battery according to claim 3, wherein the first negative electrode current collector is provided on the base body, and covers the groove and/or the protrusion; the first negative electrode, the first solid electrolyte layer, the first positive electrode and the first positive electrode current collector are sequentially laminated on the first negative electrode current collector and at least partially cover the groove and/or the protrusion.

5. The thin film lithium ion battery according to claim 3, wherein the first external electrode is connected with the first positive electrode current collector, and the second external electrode is connected with the first negative electrode current collector.

6. The thin film lithium ion battery according to claim 5, wherein the first negative electrode current collector is a thin film layer with uniform thickness.

7. The thin film lithium ion battery according to claim 3, wherein the thin film lithium ion battery cell further comprises: a second positive electrode, a second solid electrolyte layer, a second negative electrode, and a second negative electrode current collector; the second positive electrode, the second solid electrolyte layer, the second negative electrode and the second negative electrode current collector are sequentially laminated on the first positive electrode current collector.

8. The thin film lithium ion battery according to claim 7, wherein the thin film lithium ion battery cell further comprises: a third negative electrode, a third solid electrolyte layer, a third positive electrode and a second positive electrode current collector; the third negative electrode, the third solid electrolyte layer, the third positive electrode and the second positive electrode current collector are sequentially laminated on the second negative electrode current collector.

9. The thin film lithium ion battery according to claim 8, wherein the thin film lithium ion battery cell further comprises an insulating layer which is laminated on the second positive electrode current collector.

10. The thin film lithium ion battery according to claim 9, wherein the thin film lithium ion battery cell further comprises: a conducting layer which is sandwiched between the second negative electrode current collector and the insulating layer, and covers the groove and/or the protrusion.

11. The thin film lithium ion battery according to claim 9, wherein the base body is an insulating base body, the first external electrode and the second external electrode are both provided on a first side of the base body, and the first side is a side on which the thin film lithium ion battery cell is provided;
the first external electrode is electrically connected, from an upper surface of the insulating layer and through the insulating layer, with the first positive electrode current collector and the second positive electrode current collector respectively; the second external electrode is electrically connected, from the upper surface of the insulating layer and through the insulating layer, with the first negative electrode current collector and the second negative electrode current collector.

12. The thin film lithium ion battery according to claim 9, wherein the base body is a conducting base body, the second external electrode comprises a first electrical connection part and a second electrical connection part, the first electrical connection part and the first external electrode are both provided on a first side of the base body, the second electrical connection part is provided on a second side of the base body, the first electrical connection part and the second electrical connection part are both conducting with the base body, and the first side is a side on which the thin film lithium ion battery cell is provided;
the first external electrode is electrically connected, from an upper surface of the insulating layer and through the insulating layer, with the first positive electrode current collector and the second positive electrode current collector; the first electrical connection part is electrically connected, from the upper surface of the insulating layer and through the insulating layer, with the first negative electrode current collector and the second negative electrode current collector.

13. The thin film lithium ion battery according to any one of claims 2 to 12, wherein the groove comprises a bottom wall and a side wall, the side wall is in connection with the upper surface of the base body, and the thin film lithium ion battery cell is formed on the side wall and the bottom wall.

14. The thin film lithium ion battery according to any one of claims 2 to 12, wherein the protrusion comprises a top wall and a side wall, the side wall is in connection with the upper surface of the base body, and the thin film lithium ion battery cell is formed on the side wall and the top wall.

15. The thin film lithium ion battery according to any one of claims 2 to 12, wherein the groove or the protrusion is at least one in number.

16. The thin film lithium ion battery according to claim 1, wherein the base body is a substrate; or,
the base body comprises: a substrate, and at least one of an epitaxial layer, an oxide layer, a doped layer or a bonding layer formed on the substrate.

17. A method of preparing a thin film lithium ion battery, comprising:
providing a thin film lithium ion battery cell on a base body, wherein a groove and/or a protrusion is provided on the base body, and the thin film lithium ion battery cell covers the groove and/or the protrusion; and
providing a first external electrode and a second external electrode, wherein the first external electrode and the second external electrode are configured to connect the thin film lithium ion battery cell to an external component.

18. The method according to claim 17, wherein the base body comprises an upper surface and a lower surface, the groove is formed by recessing downward from the upper surface, or the protrusion is formed by protruding upward from the upper surface.

19. The method according to claim 18, wherein the providing the thin film lithium ion battery cell on the base body comprises:
forming, on the base body, a first positive electrode, a first negative electrode, a first solid electrolyte layer, a first positive electrode current collector and a first negative electrode current collector; wherein the first solid electrolyte layer is sandwiched between the first positive electrode and the first negative electrode, the first negative electrode is provided between the first negative electrode current collector and the first solid electrolyte layer, and the first positive electrode is provided between the first positive electrode current collector and the first solid electrolyte layer.

20. The method according to claim 19, wherein the forming, on the base body, the first positive electrode, the first negative electrode, the first solid electrolyte layer, the first positive electrode current collector and the first negative electrode current collector comprises:
forming the first negative electrode current collector, the first negative electrode, the first solid electrolyte layer, the first positive electrode and the first positive electrode current collector sequentially on the base body, wherein the first negative electrode current collector covers the groove and/or the protrusion, and the first negative electrode, the first solid electrolyte layer, the first positive electrode and the first positive electrode current collector at least partially cover the groove and/or the protrusion.

21. The method according to claim 19, wherein the first external electrode is connected with the first positive electrode current collector, and the second external electrode is connected with the first negative electrode current collector.

22. The method according to claim 21, wherein the first negative electrode current collector is a thin film layer with uniform thickness.

23. The method according to claim 19, wherein after the forming the first negative electrode current collector, the first negative electrode, the first solid electrolyte layer, the first positive electrode and the first positive electrode current collector sequentially on the base body, further comprising:
sequentially forming a second positive electrode, a second solid electrolyte layer, a second negative electrode and a second negative electrode current collector on the first positive electrode current collector.

24. The method according to claim 23, wherein after the forming the second positive electrode, the second solid electrolyte layer, the second negative electrode and the second negative electrode current collector sequentially on the first positive electrode current collector, further comprising:
sequentially forming, on the second negative electrode current collector, a third negative electrode, a third solid electrolyte layer, a third positive electrode and a second positive electrode current collector.

25. The method according to claim 24, wherein after the sequentially forming, on the second negative electrode current collector, the third negative electrode, the third solid electrolyte layer, the third positive electrode and the second positive electrode current collector, further comprising:
forming an insulating layer on the second positive electrode current collector.

26. The method according to claim 25, further comprising:
forming a conducting layer which is sandwiched between the second negative electrode current collector and the insulating layer, and covers the groove and/or the protrusion.

27. The method according to claim 26, wherein the base body is an insulating base body, the first external electrode and the second external electrode are both provided on a first side of the base body, and the first side is a side on which the thin film lithium ion battery cell is provided; wherein the providing the first external electrode and the second external electrode comprises:
providing at least four via holes on the insulating layer, wherein the first external electrode is electrically connected, from an upper surface of the insulating layer and through the at least two via holes, with the first positive electrode current collector and the second positive electrode current collector respectively; and the second external electrode is electrically connected, from the upper surface of the insulating layer and through the at least two via holes, with the first negative electrode current collector and the second negative electrode current collector respectively.

28. The method according to claim 26, wherein the base body is a conducting base body, the second external electrode comprises a first electrical connection part and a second electrical connection part, the first electrical connection part and the first external electrode are both provided on a first side of the base body, the second electrical connection part is provided on a second side of the base body, the first electrical connection part and the second electrical connection part are both conducting with the base body, and the first side is a side on which the thin film lithium ion battery cell is provided; wherein the providing the first external electrode and the second external electrode comprises:
providing at least four via holes on the insulating layer, wherein the first external electrode is electrically connected, from an upper surface of the insulating layer and through the at least two via holes, with the first positive electrode current collector and the second positive electrode current collector respectively; and the first electrical connection part is electrically connected, from the upper surface of the insulating layer and through the at least two via holes, with the first negative electrode current collector and the second negative electrode current collector respectively.

29. The method according to any one of claims 18 to 28, wherein the groove comprises a bottom wall and a side wall, the side wall is in connection with the upper surface of the base body, and the thin film lithium ion battery cell is formed on the side wall and the bottom wall.

30. The method according to any one of claims 18 to 28, wherein the protrusion comprises a top wall and a side wall, the side wall is in connection with the upper surface of the base body, and the thin film lithium ion battery cell is formed on the side wall and the top wall.

31. The method according to any one of claims 18 to 28, wherein the groove or the protrusion is at least one in number.

32. The method according to claim 17, wherein the base body is a substrate; or,
the base body comprises: a substrate, and at least one of an epitaxial layer, an oxide layer, a doped layer or a bonding layer formed on the substrate.

33. A terminal, comprising: the thin film lithium ion battery according to any one of claims 1 to 17.
